# EUROPEAN PATENT APPLICATION

(11) **EP 1 213 213 A2**
(43) Date of publication of application: **12.06.2002**
(21) Application number: 01126503.0
(22) Date of filing: 12.11.2001
(51) Int. Cl.: B62K 3/00, B62M 1/00, A63B 23/00, A63B 23/04, A63B 21/008

(54) **Means of locomotion**

(30) Priority: 16.11.2000 IT TV000137
(71) Applicant: Dag Horses S.r.l., 31033 Castelfranco Veneto (Treviso) (IT)
(72) Inventor: Cavallin, Camillo, 31050 Vedelago (Treviso) (IT); Bessegato, Roberto, 31100 Treviso (IT)
(74) Representative: Modiano, Guido, Dr.-Ing.

(57) **Abstract**

A means of locomotion, particularly for cycling activity and/or for practicing gymnastic activities, comprising a supporting frame (2) for a pair of wheels (6a, 6b) and first pedal means (14a, 14b) for activating a hydraulic circuit (21) that interacts with second means for transmitting motion to at least one of the wheels (6a, 6b).

## Description

The present invention relates to a means of locomotion particularly suitable for cycling activity and/or for practicing a gymnastic activity such as the one known as stepping.

Currently, this gymnastic activity is performed in a gymnasium by using fixed implements for stepping, which are advantageously constituted by a footing which is associated, in an upper region, with a frame.

The frame acts as a support for a handlebar, which protrudes upward at the front side of the stepping implement and proximate to which it is possible to arrange one or more adjustment means, for example for adjusting the required power, and indicators for controlling data such as time, speed and dissipated calories.

Above the footing and to the rear with respect to the handlebar, there is a device for practicing stepping, which is conveniently constituted by a pair of mutually parallel pedals.

The pedals are rotatably associated with said frame at a first front end, so that they are allowed a partial rotation about a horizontal axis that is arranged transversely to said implement.

At a second end that lies opposite the first one, each one of the pedals is associated, in a lower region, with a third end of a hydraulic cylinder, whose free end is advantageously rigidly coupled in a region of the frame that lies below the pedals.

The hydraulic circuit associated with the hydraulic cylinders provides a direct connection between them, so that the downward movement of one pedal is matched by the compression of the associated cylinder, with migration of the contained liquid, which is usually oil, into the other cylinder.

The inflow of oil into the separate cylinder causes its extension and the consequent rise of the associated pedal.

One thus obtains an alternating oscillating movement of the pedals that is particularly suitable for simulating the action of climbing steps.

The benefits provided by the frequent use of this known type of stepping implement are constituted by the possibility to achieve considerable stimulation of the lower limbs and particularly of the quadriceps, glutei and calves.

The present stepping implement is particularly versatile, since it can be suitable for strengthening the leg muscles or for firming them up, depending on the physical characteristics and requirements of the user.

Such implement furthermore allows aerobic sports activity, and this can entail an improvement in blood circulation and higher cardiorespiratory efficiency.

The main drawback of this known type of stepping implement is that it is very bulky and expensive; accordingly, it is widely used in gymnasiums and fitness centers, but few users have opted for purchase and subsequent home use.

This drawback entails the fact that many users use such known type of stepping implement only occasionally; this entails a sharp reduction in the above cited advantages and therefore substantially renders useless the efforts made.

Another disadvantage of this known type of stepping implement is that it is fixed: in this manner, all the energy expended by the user is used solely for the purpose of acquiring physical benefits, but no additional advantage can be achieved.

Vice versa, means of locomotion on two or more wheels, such as for example a scooter, are known; they are in any case scarcely practical as a means of locomotion and most of all scarcely effective as a sports implement, since they do not act optimally in developing leg muscles.

The aim of the present invention is to solve the above noted problems, eliminating the drawbacks of the cited prior art, by providing a means of locomotion that is suitable to be used simultaneously for practicing gymnastic activities, such as in particular so-called stepping.

Within this aim, an object of the invention is to provide a means of locomotion that has reduced dimensions and weight.

Another object is to provide a means of locomotion that can be used easily and intuitively, so that it is optionally suitable even by children.

Another object is to provide a means of locomotion that is structurally simple and has low manufacturing costs.

This aim and these and other objects that will become better apparent hereinafter are achieved by a means of locomotion, particularly for cycling activity and/or for practicing gymnastic activities, which comprises a supporting frame for a pair of wheels, characterized in that it further comprises first pedal means for activating a hydraulic circuit that interacts with second means for transmitting motion to one of said wheels.

Further characteristics and advantages of the invention will become better apparent from the detailed description of a particular embodiment thereof, illustrated only by way of non-limitative example in the accompanying drawings, wherein:

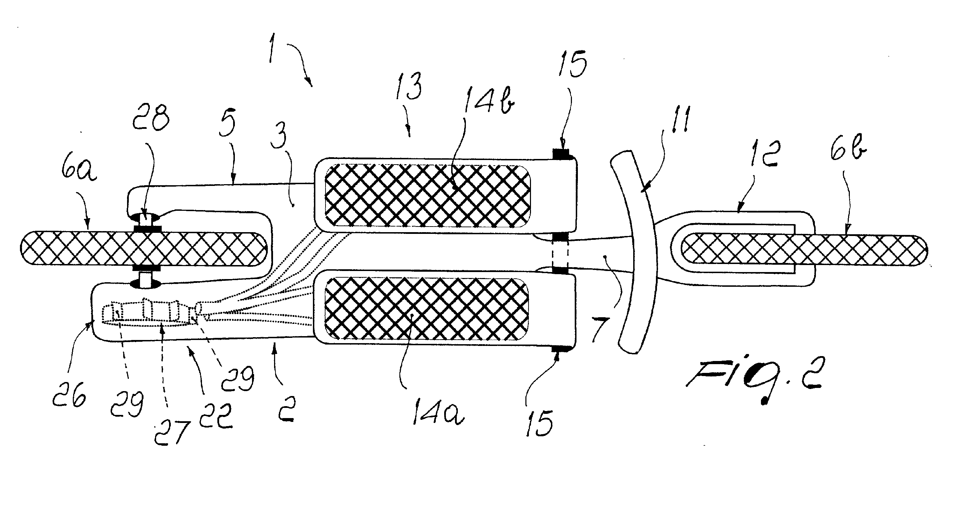

Figures 1 and 2 are respectively a side view and a plan view of the means of locomotion according to the invention;

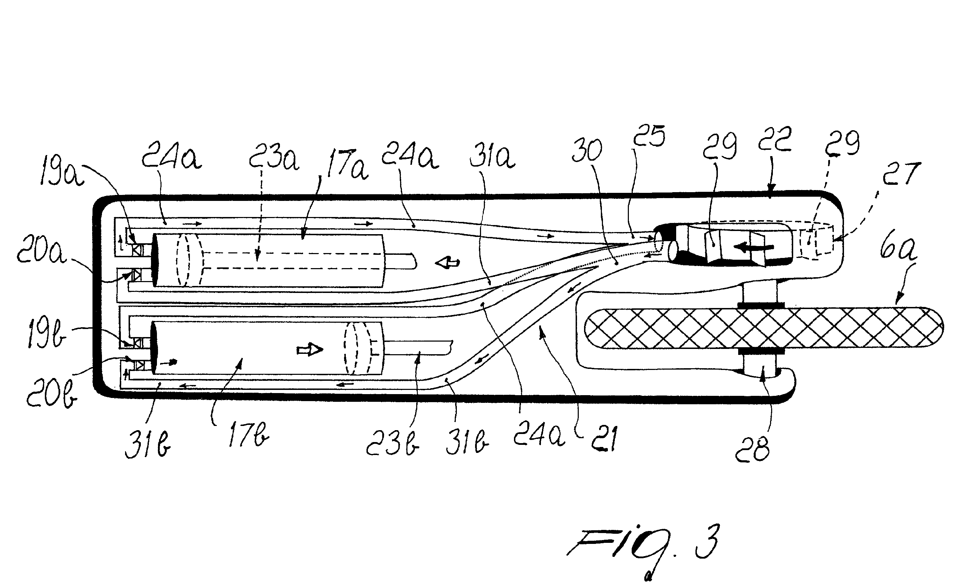

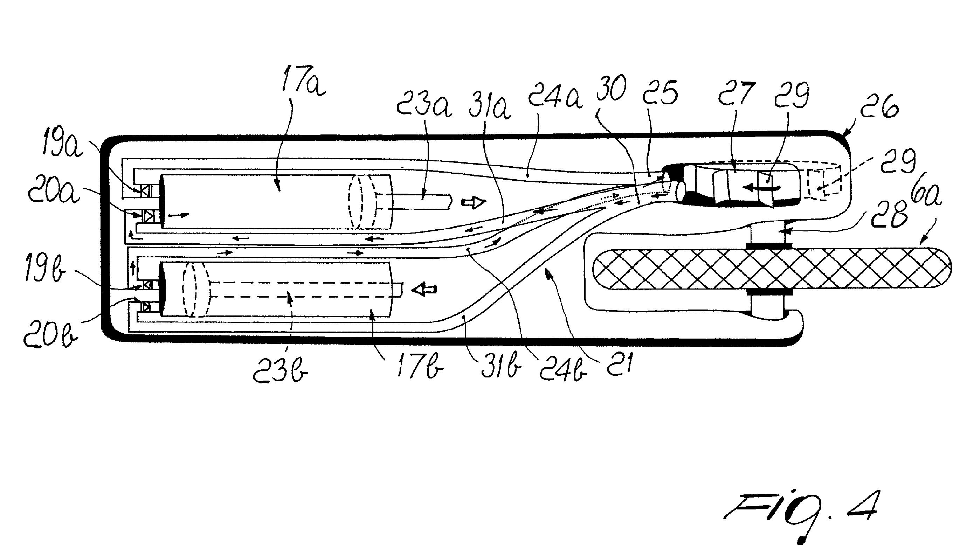

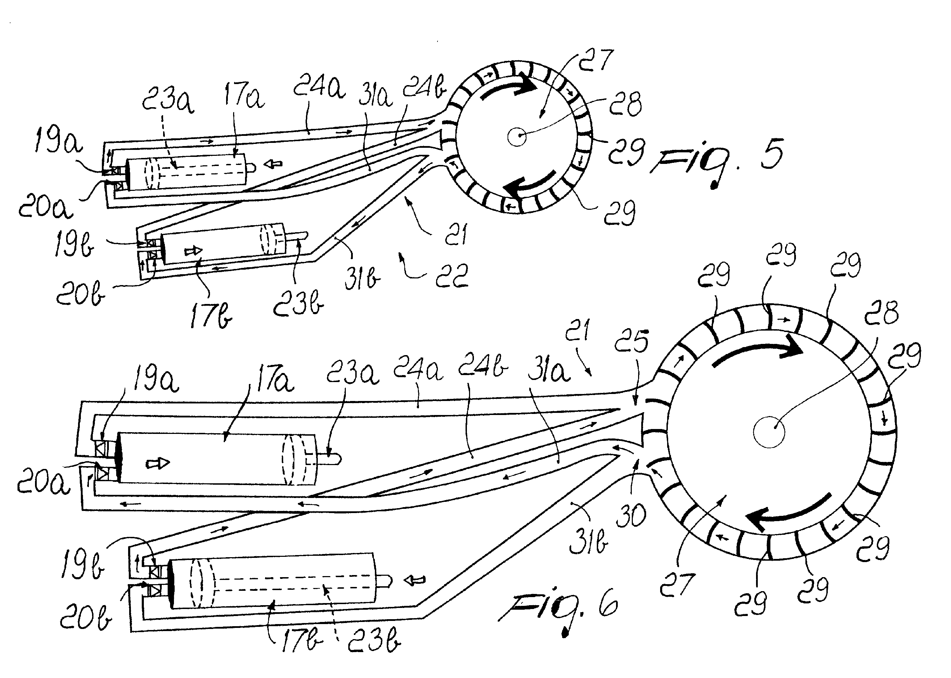

Figures 3 and 4 are schematic views of the hydraulic circuit in two different steps;

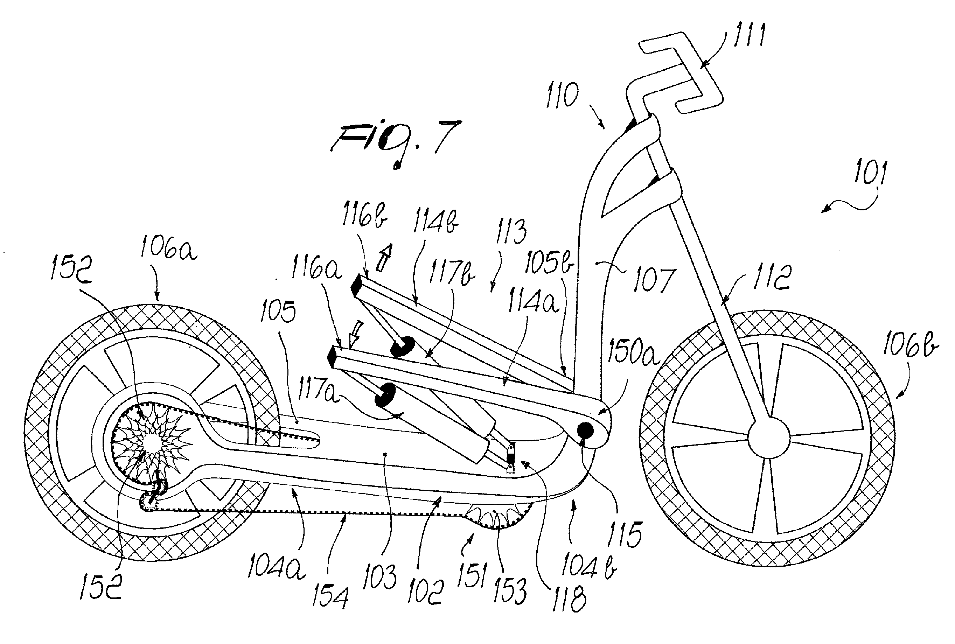

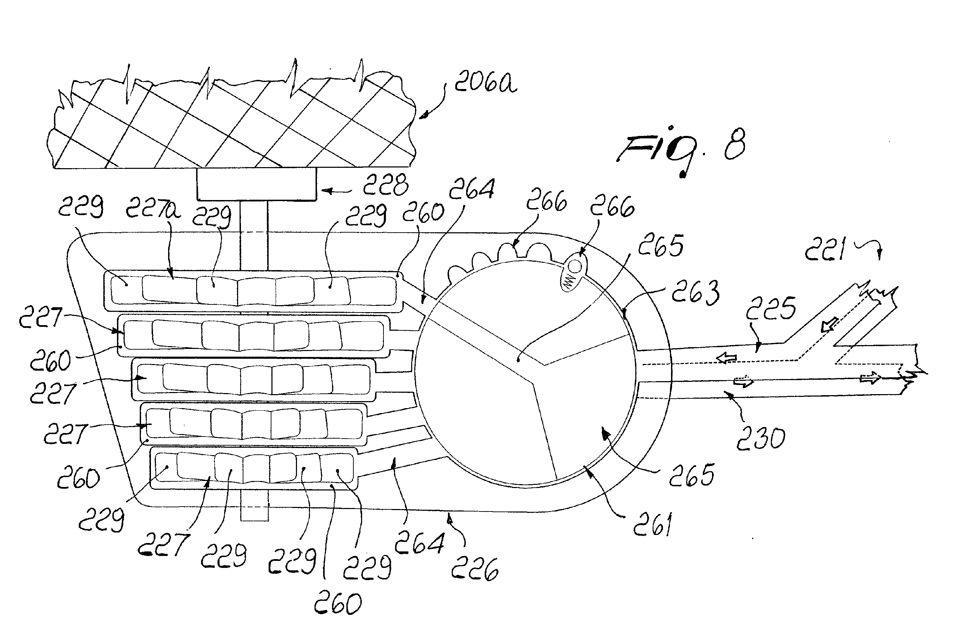

Figures 5 and 6 are schematic views of the second motion transmission means in two different steps;
Figure 7 is a view of a different embodiment, in which a chain transmission is used;
Figure 8 is a top view of another embodiment of the second motion transmission means.

With reference to the figures, the reference numeral 1 generally designates a means of locomotion, particularly suitable for cycling and/or for practicing gymnastic activities, particularly the practice known as stepping.

Such means of locomotion 1 comprises a supporting frame 2, which in turn comprises a horizontal deck 3 that has, at a first end 4a, a first fork 5, for connection to a rear wheel 6a.

At a second end 4b, the deck 3 is associated with, or rigidly coupled to, a stem 7 that protrudes upward in an approximately perpendicular fashion.

The stem 7 has, at its free end 8, suitable means, designated by the reference numeral 9, for rotary connection to a steering device 10.

The steering device 10 comprises a handlebar 11 that is associated, in a lower region, with a second fork 12, for connection to a front wheel 6b.

Above the deck 3 there are first pedal means, designated by the reference numeral 13, that conveniently comprise two pedals arranged side by side so as to form a right pedal and a left pedal, respectively designated by the reference numerals 14a and 14b, which are preferably approximately rectangular.

The two pedals 14a and 14b are rotatably associated, at a third end 50a and 50b, with one end of a first hub, designated by the reference numeral 15, that protrudes horizontally from the stem 7 proximate to the second end 4b of the deck 3.

The two pedals 14a and 14b have, at a fourth end, designated by the reference numerals 16a and 16b and arranged opposite the third end 50a and 50b, a connection to two hydraulic cylinders 17a and 17b, which are appropriately pivoted in a region 18 of said deck 3 located proximate to the second end 4b of the deck.

The pivoting region 18 must be located below the pair of pedals 14a and 14b, preferably approximately in an intermediate region.

Each cylinder of the pair of hydraulic cylinders 17a and 17b has first and second one-way valves 19a, 20a and 19b, 20b, suitable to connect the cylinder to a hydraulic circuit, designated by the reference numeral 21, for connection to second means 22 for transmitting motion to at least one of the rear and front wheels; in the embodiment described here, the second means are associated with the rear wheel 6a.

In particular, the first one-way valves 19a and 19b are arranged so as to allow the liquid, preferably oil, contained in the pair of cylinders 17a and 17b, to flow out; vice versa, the second one-way valves 20a and 20b are arranged so as to allow the oil to flow into the pair of cylinders 17a and 17b, lowering respectively a first piston and a second piston, designated by the reference numerals 23a and 23b.

The first one-way valves 19a and 19b are connected to a first duct 24a and a second duct 24b, which merge so as to constitute a third inlet duct 25 for sending oil into said second motion transmission means 22.

The second means 22 are constituted by a closed box-like element, designated by the reference numeral 26, which internally contains a further wheel 27 that is rigidly coupled to a second hub, designated by the reference numeral 28, of the rear wheel 6a so that its axis coincides with the axis of the rear wheel.

A plurality of radial fins, generally designated by the reference numeral 29, protrude perimetrically from the wheel 27, are approximately rectangular and are advantageously curved so as to have a vane-like shape; the wheel 27 furthermore has suitable locking means of a known type that allow rotation in a single direction, i.e., the direction of advancement of said means of locomotion.

The closed box-like element 26 has dimensions that allow it to contain almost exactly the wheel 27 and can optionally include suitable lateral and perimetric sealing means for the fins 29, such as one or more sealing gaskets.

The oil entering from the third duct 25 under pressure causes the rotation of the wheel 27 in the only direction allowed by said locking means, such as additional one-way valves.

Proximate to the third inlet duct 25 and upstream of said duct with respect to the direction of rotation of the wheel 27 there is a fourth duct, designated by the reference numeral 30, for the outflow of the oil from the motion transmission means 22.

The fourth duct 30 is connected to a fifth duct 31a and a sixth duct 31b for the return of the oil respectively toward said right cylinder 17a or the left cylinder 17b: in particular, the oil rises in the duct connected to the cylinder that is not pressurized, until it reaches and passes beyond the second inlet valve 20a or 20b.

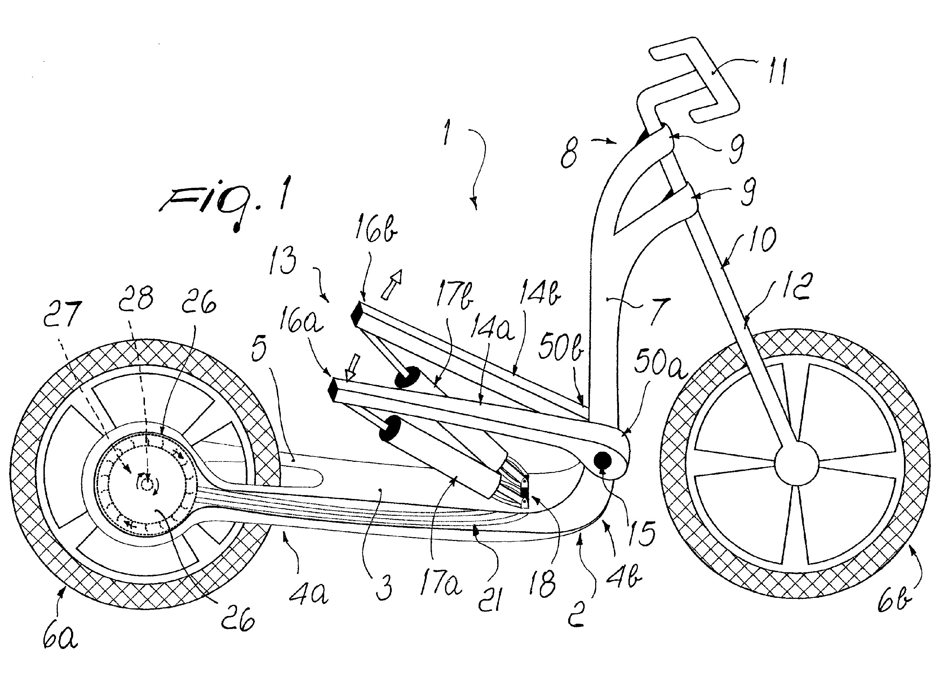

Operation is therefore as follows: with reference to Figure 1, the user can rest his feet on the pair of pedals 14a and 14b, resting his hands on the handlebar 11.

By alternately balancing his weight on the right foot and on the left foot, the user acts on the respective right or left pedal 14a and 14b so as to lower it.

In its descent, the right or left pedal, pivoted at the first hub 15, turns so as to push the first or second piston 23a or 23b in the respective cylinder 17a or 17b, causing the simultaneous outflow of the oil through the first one-way valve 19a or 19b.

Through the hydraulic circuit 21, the oil is sent to the second means 22 for transmitting motion to the rear wheel 6a, thus causing the rotation of the third wheel 27 in the only direction allowed by said locking means of a known type.

This rotation causes the simultaneous rotation of the rear wheel and therefore the advancement of the means of locomotion 1.

The oil that flows out of the second transmission means merges, through the second one-way valve 20b or 20a, in the cylinder 17b or 17a that is not subjected to the weight of the user, pushing out the first or second piston 23b or 23a and thus lifting the respective left pedal 14b or right pedal 14a.

It has thus been observed that the invention has achieved the intended aim and objects, a means of locomotion having been devised which is suitable to be used simultaneously for the practice of gymnastic activities such as in particular so-called stepping.

In this manner, a user can practice this activity, obtaining the above listed benefits from it, while traveling from one place to another by virtue of said means of locomotion.

The invention is of course susceptible of numerous modifications and variations, all of which are within the scope of the same inventive concept.

Thus, for example, the second motion transmission means can be located at the front wheel, so that it becomes the propulsion wheel.

Another embodiment of the invention is shown in Figure 7. In this case the means of locomotion 101 comprises a frame, designated by the reference numeral 102, which in turn comprises a horizontal deck 103 that has, at a first end 104a, a first fork 105, for connection to a first rear wheel 106a.

At a second end, designated by the reference numeral 104b, the deck 103 is associated with, or rigidly coupled to, a stem 107 that protrudes upward in an approximately perpendicular fashion.

The stem 107 is associated, in an upper region, with a steering device 110 that comprises a handlebar 111 which is associated, in a lower region, with a second fork 112, for connection to a second front wheel 106b.

Above the deck 103 there are first pedal means, designated by the reference numeral 113, which conveniently comprise two pedals arranged side by side and designated by the reference numerals 114a and 114b, which are preferably approximately rectangular.

The two pedals 114a and 114b are rotatably associated, at a third end 150a and 150b, with a first hub, designated by the reference numeral 115, that protrudes horizontally from the stem 107 proximate to the second end 104b of the deck 103.

The two pedals 114a and 114b have, at a fourth end designated by the reference numerals 116a and 116b and arranged opposite the third end 150a and 150b, a connection to two hydraulic cylinders 117a and 117b, which are appropriately pivoted in a region 118 arranged proximate to the second end 104b of the deck 103.

Each cylinder of the pair of hydraulic cylinders 117a and 117b has appropriate first and second one-way valves that are suitable to connect the cylinder to a hydraulic circuit, not shown, for connection to second means 122 for transmitting motion to said first rear wheel.

The second motion transmission means 122 are advantageously constituted by a box-like element, which is associated with the hydraulic circuit and contains a wheel provided perimetrically with a plurality of radial fins.

The box-like element, rigidly coupled to the deck 103 or formed therein, is associated with suitable mechanical means, designated by the reference numeral 151, for connection to one or more sprockets 152, which are in turn associated with the rear wheel 106a.

The mechanical connection means 151 are preferably constituted by a gear, designated by the reference numeral 153, which interacts with a chain 154 for transmitting motion to said one or more sprockets 152.

Another embodiment uses, inside a closed box-like element designated by the reference numeral 226, a plurality of wheels 227 that are arranged in succession along a second hub 228 of a rear wheel 206a so that the axis of each wheel 227 coincides with the axis of the rear wheel 206a.

The wheels 227 have diameters that can vary according to their position with respect to the rear wheel 206a; in particular, the smaller the distance of the wheels 227 from the rear wheel 206a, the greater their respective diameter.

A plurality of radial fins, generally designated by the reference numeral 229, protrude perimetrically from each one of the wheels 227, are approximately rectangular and are advantageously curved so as to have a vane-like shape; said wheels 227 furthermore have suitable locking means of a known type that are suitable to allow rotation in a single direction, i.e., the direction of advancement of said means of locomotion.

The closed box-like element 226 is internally provided with a plurality of first cavities 260, whose dimensions contain almost exactly each one of the wheels 227.

Each one of the first cavities 260 is connected to a selection means, designated by the reference numeral 261, that can be activated by the user manually or by virtue of mechanical and/or electrical means of a known type.

The selection means 261 allows to activate a chosen wheel, designated by the reference numeral 227a, by sending the pressurized oil only to such wheel, thus bypassing the remaining third wheels 227.

In this manner, as the diameter of the chosen wheel 227a increases, for an equal flow-rate of oil the arc traced by the first wheel 206a decreases, and therefore the ratio between the number of turns of the rear wheel and the number of pedal strokes performed by the user decreases.

By acting on the selection means 261, the user can choose the most suitable transmission ratio according to the path to be covered, to his specific characteristics, or to the intended physical activity.

A particular embodiment of the selection means 261 is described hereinafter and shown in Figure 8; the selection means is merely an example of a plurality of other selection means, even of a known type, that can be applied to the invention.

In this embodiment, the selection means 261 is constituted by a cylindrical body 262 that can be accommodated in a complementarily shaped second cavity, designated by the reference numeral 263, whose longitudinal axis is preferably approximately perpendicular to the axis of said second hub 228.

The second cavity 263 is connected to a third inlet duct 225 and to a fourth outlet duct 230, which are part of a hydraulic circuit 221 that is suitable to convey the oil among the various parts of the means of locomotion.

The second cavity 263 is furthermore connected to a plurality of channels, designated by the reference numeral 264, for connection to the respective first cavities 260.

The cylindrical body 262, rotatably associated with said second cavity 263, is radially provided with a through slot 265 that is preferably funnel-shaped, so as to allow to convey the oil that arrives from the third duct 225 into the chosen channel of the channels 264.

The selection means 261 is perimetrically provided with suitable selective adjustment means, designated by the reference numeral 266, that allow the rotation of the cylindrical body 262 only in the positions in which the through slot 265 is connected to one of said channels 264.

In the closed box-like element 226 it is also optionally possible to include suitable lateral and perimetric sealing means for fins 229, such as one or more sealing gaskets.

The oil that enters from a third duct 225 under pressure causes the rotation of the chosen third wheel 227a in the only direction allowed by the locking means, thus imparting the propulsion force to the means of locomotion.

The materials used, as well as the dimensions that constitute the individual components of the invention, may of course be more pertinent according to specific requirements.

The disclosures in Italian Patent Application No. TV2000A000137 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A means of locomotion, particularly for cycling activity and/or for practicing gymnastic activities, constituted by a supporting frame for a pair of wheels, **characterized in that** it comprises first pedal means for activating a hydraulic circuit that interacts with second means for transmitting motion to at least one of said wheels.

2. The means of locomotion according to claim 1, **characterized in that** it comprises a deck that is arranged approximately horizontally and has, at a first end, a first fork for connection to a first wheel, which is a rear wheel, said deck being associated with, or rigidly coupled to, at a second end, a stem that protrudes upward in an approximately perpendicular fashion, said stem having, at its free end, suitable means for rotary connection to a steering device, which preferably comprises a handlebar that is associated, in a lower region, with a second fork that is suitable for connection to a front wheel, above said deck said first pedal means being provided, which comprise two pedals arranged side by side, each one of said two pedals being rotatably associated, at a third end, with a first hub, which protrudes horizontally from said stem approximately proximate to said second end of said deck.

3. The means of locomotion according to claims 1 and 2, **characterized in that** said pair of pedals has, at a fourth end that lies opposite said third end, a connection to a pair of hydraulic cylinders that are appropriately pivoted in a region located approximately proximate to said second end of said deck, said pivoting region being formed below said pair of pedals.

4. The means of locomotion according to claims 1 and 3, **characterized in that** each one of said two hydraulic cylinders has, at its head, which is directed toward said pivoting region, first and second one-way valves that are suitable to connect said pair of cylinders to said hydraulic circuit for connection to said second motion transmission means.

5. The means of locomotion according to claim 4, **characterized in that** said first and second one-way valves are arranged so as to allow respectively the inflow and outflow of the liquid, usually oil, contained in said pair of cylinders.

6. The means of locomotion according to claim 5, **characterized in that** said first one-way valves are connected to a first duct and a second duct, which merge so as to constitute a third inlet duct for sending the oil into said second motion transmission means.

7. The means of locomotion according to one or more of the preceding claims, **characterized in that** said second motion transmission means are advantageously constituted by a closed box-like element, which contains a further wheel that is rigidly coupled to a second hub of said rear wheel.

8. The means of locomotion according to one or more of the preceding claims, **characterized in that** a plurality of radial fins protrude perimetrically from said further wheel, which is arranged so that its axis coincides with the axis of said rear wheel, said fins being approximately rectangular and advantageously curved.

9. The means of locomotion according to one or more of the preceding claims, **characterized in that** said further wheel has locking means, which are suitable to allow the rotation of said wheel in a single direction and therefore in the direction of advancement of said means of locomotion.

10. The means of locomotion according to one or more of the preceding claims, **characterized in that** said closed box-like element has dimensions suitable to contain almost exactly said further wheel and can comprise lateral and/or perimetric sealing means for said radial fins.

11. The means of locomotion according to one or more of the preceding claims, **characterized in that** said third inlet duct is arranged approximately tangent to said further wheel, so as to facilitate its rotation, imposed by the inflow of the oil under pressure, in the only direction allowed by said locking means.

12. The means of locomotion according to one or more of the preceding claims, **characterized in that** proximate to said third inlet duct and upstream thereof with respect to the direction of rotation of said further wheel there is a fourth duct for the outflow of the oil from said motion transmission means.

13. The means of locomotion according to one or more of the preceding claims, **characterized in that** said fourth duct is connected to a fifth duct and a sixth duct for the return of the oil respectively toward the cylinder of said pair of cylinders that is not pressurized by the descent of the respective pedal of said pair of pedals.

14. The means of locomotion according to one or more of the preceding claims, **characterized in that** said second motion transmission means are associated with said front wheel.

15. The means of locomotion according to one or more of the preceding claims, **characterized in that** said second motion transmission means, associated with said deck, comprise mechanical means for connection to one or more sprockets, which are in turn associated with said rear wheel.

16. The means of locomotion according to one or more of the preceding claims, **characterized in that** said mechanical connection means are constituted by a gear that interacts with a chain for transmitting motion to said one or more sprockets.

17. The means of locomotion according to claim 6, **characterized in that** said second motion transmission means are constituted by a closed box-like element that contains one or more further wheels, which are arranged in mutual succession along the same axis and are rigidly coupled to a second hub of said rear wheel.

18. The means of locomotion according to claim 17, **characterized in that** said further wheels, whose diameters have mutually different dimensions, have an axis that coincides with the axis of the rear wheel.

19. The means of locomotion according to claim 18, **characterized in that** said further wheels have diameters that decrease proportionally to their distance from said rear wheel.

20. The means of locomotion according to claim 18, **characterized in that** a plurality of radial fins protrude perimetrically from each one of the further wheels, are approximately rectangular, and are curved.

21. The means of locomotion according to claim 20, **characterized in that** said further wheel has locking means, which allow its rotation in a single direction and therefore in the direction of advancement of said means of locomotion.

22. The means of locomotion according to claim 21, **characterized in that** said closed box-like element is internally provided with two or more first cavities, each cavity having dimensions that allow it to contain almost exactly a respective one of said further wheels, said box-like element optionally comprising appropriate lateral and/or perimetric sealing means for said radial fins.

23. The means of locomotion according to claim 22, **characterized in that** each one of said first cavities is connected to a selection means that can be activated by the user manually or by virtue of mechanical and/or electrical means and is suitable to vary the transmission ratio of said means of locomotion.

24. The means of locomotion according to claim 23, **characterized in that** said selection means is meant to activate a single chosen one of said further wheels, by bypassing the remaining said further wheels.

25. The means of locomotion according to claim 24, **characterized in that** said selection means is constituted by a cylindrical body that can be accommodated in a complementarily shaped second cavity whose longitudinal axis is preferably approximately perpendicular to the axis of said second hub.

26. The means of locomotion according to claim 25, **characterized in that** said second cavity is connected to said third inlet duct and said fourth outlet duct and to a plurality of channels for connection to said respective first cavities.

27. The means of locomotion according to claim 26, **characterized in that** said cylindrical body, rotatably associated with said second cavity, is radially provided with a through slot, which is preferably funnel-shaped, so as to allow to convey the oil that arrives from said third duct into a chosen one of said channels.

28. The means of locomotion according to claim 27, **characterized in that** said selection means is perimetrically provided with selective adjustment means that are suitable to allow the rotation of said cylindrical body only in the positions in which said through slot is connected to one of said channels.
